# EUROPEAN PATENT APPLICATION

(11) **EP 0 602 957 A1**
(43) Date of publication of application: **22.06.1994**
(21) Application number: 93310139.6
(22) Date of filing: 15.12.1993
(51) Int. Cl.: H04B 10/14

(54) **System and method for the transmission of audio signals over an optical channel**

(30) Priority: 15.12.1992 US 991043
(71) Applicant: THOMAS & BETTS CORPORATION, Memphis Tennessee 38119 (US)
(72) Inventor: Lord, Randall B., Spartanburg, South Carolina 29301 (US)
(74) Representative: Howick, Nicholas Keith

(57) **Abstract**

A light signal transmitter for providing an output light signal corresponding to an input signal having a characteristic varying with time, comprises an electrooptic transmitter device drivable for generating output light signals of diverse light frequencies and drive circuitry for receiving the input signal and for so driving the electrooptic transmitter device responsively thereto to cause generation thereby of output light signals having frequencies differing with time correspondingly with characteristic variations of the input signal, all of such output light signal frequencies exceeding an output light signal frequency of the electrooptic transmitter device generated thereby in the absence of the input signal. A system for replication of an input audio signal at a remote location encompasses the described light signal transmitter, an optical fiber transmission link and a light signal receiver.

## Description

### Field of the Invention

This invention relates generally to transmission of signals over an optical channel and pertains more particularly to providing audio electrical signals originating at one location at a second location through the use of optical fibers.

### Background of the Invention

Presently-known automobile sound systems employ a customary wiring harness of electrical connectors as a transmission link from the car radio or magnetic tape player to the remote speakers. Harmonic distortion is unavoidable in such known arrangements, since the wiring harness is susceptible to influence induced by electromagnetic interference (EMI) and radio frequency interference (RFI).

Whereas optical transmission links are of known substantial independence in signal transmission as respects EMI and RFI, they are of complexity and component needs beyond that desired in the described automotive environment. Thus, customary optical link transmission of audio signals involves modulation of a carrier by the audio signals, impression of the modulated carrier on a transmitting LED (light-emitting diode), and demodulation of the receiving LED output to recover the audio signals at the remote location.

Examples of such customary optical link transmission are seen, e.g., in U.S. Patents No. 3,927,316 and No. 4,012,633, where the modulation is effected by applying the audio signals as inputs to a voltage-controlled oscillator which provides the carrier signal and modulates the same with the audio input signals.

While need for a carrier and modulator-demodulator circuitry is avorted in a system shown in U.S. Patent No. 4,882,773, such system requires the use of analog-to-digital conversion (ADC) in the transmitter and digital-to-analog conversion (DAC) in the receiver.

In another arrangement, for digital signal transmission, as shown in U.S. Patent No. 4,215,269, input digital signals are transformed into transmittable square-wave optical signals and an indentifier characteristic is introduced in the transformation, and the receiver includes circuitry for discriminating intended transmitted data by detecting the identifier.

From applicant's viewpoint, the art has not heretofore evolved an optical transmission arrangement sufficiently suited to use in the described automotive environment or other environment, the needs of which seem only to be satisfiable by an optical transmission arrangement simpler than the above known systems and realized without need for carrier modulation, transformation of audio signals to square-wave optical signals or ADC-DAC circuitry.

### Summary of the Invention

The present invention has as its primary object the provision of such a simpler and less component needy optical transmission arrangement.

A more particular object of the invention is the provision of improved methods, apparatus and systems for implementing automotive sound systems having optical transmission links.

In the attainment of the above and other objects, the invention provides a method for carrier-less optical transmission of alternating current signals, not requiring ADC or DAC practices or the provision of square-wave optical signals. In such connection, the methods and systems of the invention will be accordingly seen to be simpler and less component involved than heretofore known methods and systems of this general variety.

More particularly, the invention provides, in a method for transmission of alternating-current electrical input signals from a point of origin thereof to a location remote from the point of origin, the steps of: selecting for transmission from the point of origin to the remote location an electrooptic transmitting element, an optical transmission link and an electrooptic transducer; preestablishing a datum excitation level of the electrooptic transmitting element to cause the electrooptic transmitting element to apply a datum frequency light signal to the optical transmission link in the absence of the input signals; and generating drive signals for the electrooptic transmitting element having characteristics corresponding with the input signals and applying the drive signals to the electrooptic transmitting element to cause the electrooptic transmitting element to apply to the optical transmission link light signals having frequencies exceeding the datum frequency light signal. The first above step is preferably practiced in part by selecting the electrooptic transmitting element to provide diverse light frequency output correspondingly with levels of the drive signals. The first step is preferably practiced in further part by selecting the electrooptic transducer to provide diverse output voltage levels correspondingly with light frequencies of light output from the optical transmission link, which is preferably constituted by at least one optical fiber.

Otherwise viewed, in more detail and in full method aspect, the invention provides a method for the above-noted transmission of an alternating-current electrical input signal from a point of origin thereof to a location remote from the point of origin, comprising the steps of: (a) predetermining an amplitude of the input signal from a zero level thereof to the maximum negative peak thereof (b) forming a composite signal by adding to the input signal at the point of origin thereof a direct-current bias voltage equal to the predetermined amplitude and providing from the composite signal a drive sianal for a light-emitting element; (c) driving the light-emitting element correspondingly with the drive signal and applying the output light from the light-emitting element to an optical transmission link; and (d) applying light transmitted through the optical transmission link to an electrooptic transducer for reconstituting the input signal at the remote location.

Step b) may be practised in part by selecting said light-emitting element to provide diverse light frequency output correspondingly with levels of said drive signal.

Step d) may be practised in part by selecting said electrooptic transducer to provide diverse output voltage levels correspondingly with light frequencies of light output from said optical transmission link.

Step c) may be practised in part by constituting said optical transmission link by at least one optical fiber.

Step b) may be practised in part by providing said drive signal by generating direct currents proportional in amplitude to voltage levels of said composite signal.

Step c) may be practised by connecting said light-emitting element in series-circuit with a semiconductive member and applying said drive signal to said semiconductive member.

Said semiconductive member may be a transistor, said light-emitting element being conductive in series with the collector of said transistor and said drive signal being applied to the base of said transistor.

Systems of the invention implement the above practices and are below discussed in detail.

In accordance with one aspect of the invention, there is provided in a system for transmission of alternating-current electrical input signals from a point of origin thereof to a location remote from said point of origin:
a) an electrooptic transmitting element, an optical transmission link and an electrooptic transducer;
b) means for establishing a datum excitation level of said electrooptic transmitting element to cause said electrooptic transmitting element to apply a datum frequency light signal to said optical transmission link in the absence of said input signals; and
c) drive signal generating means for providing drive signals for said electrooptic transmitting element, said drive signals having characteristics corresponding with said input signals and driving said electrooptic transmitting element to cause said electrooptic transmitting element to apply to said optical transmission link light signals having frequencies exceeding said datum frequency light signal.

In accordance with a further aspect of the invention, there is provided a system for transmission of an alternating current electrical input signal from a point of origin thereof to a location remote from said point of origin, comprising:
a) a light-emitting element;
b) an optical transmission link;
c) composite signal forming means for providing a composite signal by adding to said input signal at said point of origin thereof a direct-current bias voltage having a predetermined amplitude;
d) drive signal forming means responsive to said composite signal for providing a drive signal;
e) means for driving said light-emitting element correspondingly with said drive signal, said optical link being disposed to receive output light from said light-emitting element; and
d) electrooptic transducer means disposed to receive output light from said optical link for reconstituting said input signal at said remote location.

Apparatus in accordance with a still further aspect of the invention encompasses a light signal transmitter for providing an output light signal corresponding to an input signal having a characteristic varying with time, comprising an electrooptic transmitter device drivable for generating output light signals of diverse light frequencies and drive circuitry for receiving the input signal and for so driving the electrooptic transmitter device responsively thereto to cause generation thereby of output light signals having frequencies differing with time correspondingly with characteristic variations of the input signal, all of such output light signal frequencies exceeding an output light signal frequency of the electrooptic transmitter device generated thereby in the absence of the input signal.

The foregoing and other objects and features of the invention will be further understood from the following detailed description of a preferred embodiment thereof and practice thereunder and from the drawings, wherein like reference numerals identify like components throughout.

### Description of the Drawings

Fig. 1 is a general block diagram of an arrangement in accordance with the invention.

Fig. 2 is a detailed block diagram of the carrier-less optical transmission system of the Fig. 1 arrangement.

Fig. 3 is an electrical schematic diagram of a preferred embodiment of the optical transmission system of Fig. 2.

Figs. 4 and 5 are graphic illustrations explanatory of considerations involved in the invention.

### Detailed Description Preferred Embodiments and Practices

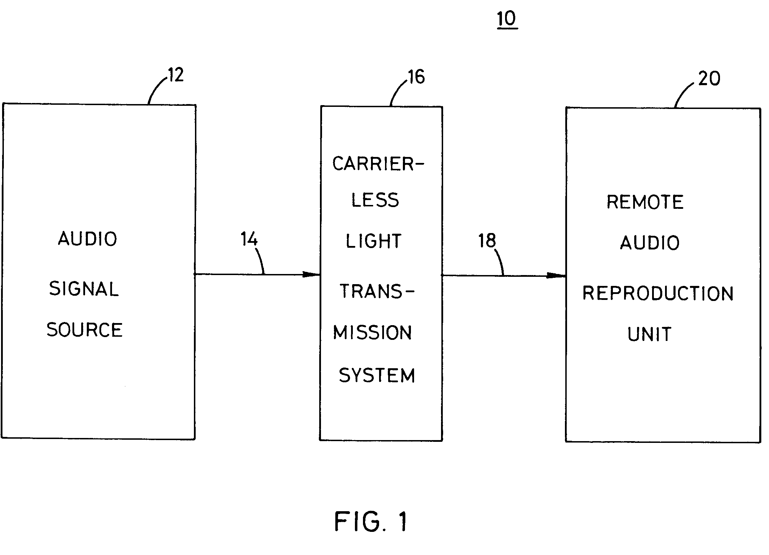

Referring to Fig. 1, arrangement 10 includes audio signal source 12, the output of which is applied over line 14 as an input to carrier-less optical transmission system 16, the output of which is in turn furnished over line 18 to remote audio reproduction unit 20.

Source 12 may comprise an automotive radio, magnetic tape player, or like audio signal generator. Remote audio reproduction unit 20 may comprise automotive sound system speakers or remotely located combinations of audio power amplifiers and speakers.

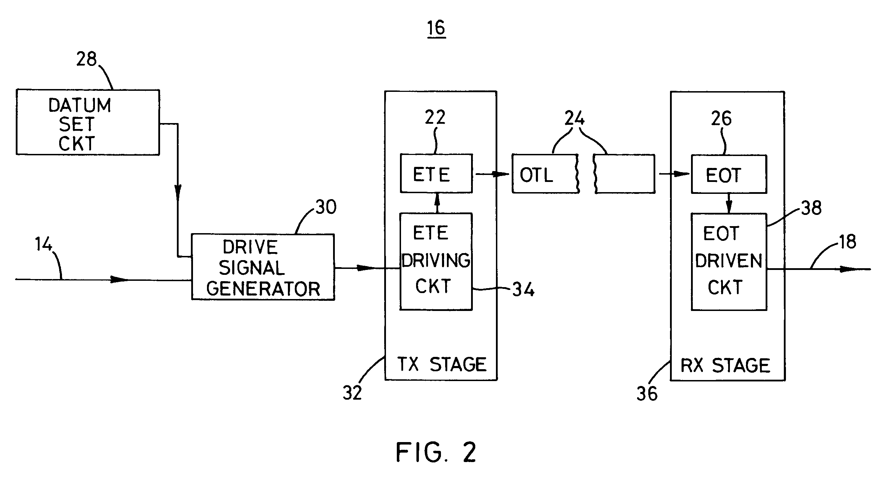

Turning to Fig. 2, carrier-less optical transmission system 16 includes an electrooptic transmitting element (ETE) 22, comprising an LED or the like, preferably providing colored output light to verify system operation.

An optical transmission link (OTL) 24 is preferably constituted by at least one optical fiber and has its input end disposed to receive light output from transmitting element 22. The output end of link 24 is disposed to issue transmission light onto electrooptic transducer (EOT) 26, which may also be constituted by an LED or the like.

Datum excitation level establishing circuitry (DATUM SET CKT) 28 has as its function the causing of transmitting element 22 to apply a datum frequency light signal to transmission link 24 in the absence of the input signals on line 14. Drive signal generator 30 receives the output of DATUM SET 28 and input signals to be transmitted, i.e., those on line 14, and has as its function the providing of drive signals for transmitting element 22. The drive signals are applied particularly to transmitting stage (TX STAGE) 32, which includes transmitting element 22 and transmitting element driving circuit (ETE DRIVING CKT) 34.

A receiving stage (RX STAGE) 36 includes electrooptic transducer 26 and a circuit driven by the transducer (EOT DRIVEN CKT) 38. Stage 36 has as its function the conversion of light output from link 24 to electrical signals and conveyance thereof to line 18.

The drive signals provided by signal generator 30 have characteristics corresponding with the input signals and drive transmitting element 22 to cause it to apply to transmission link 24 light signals having frequencies exceeding the datum frequency light signal, as is explained below.

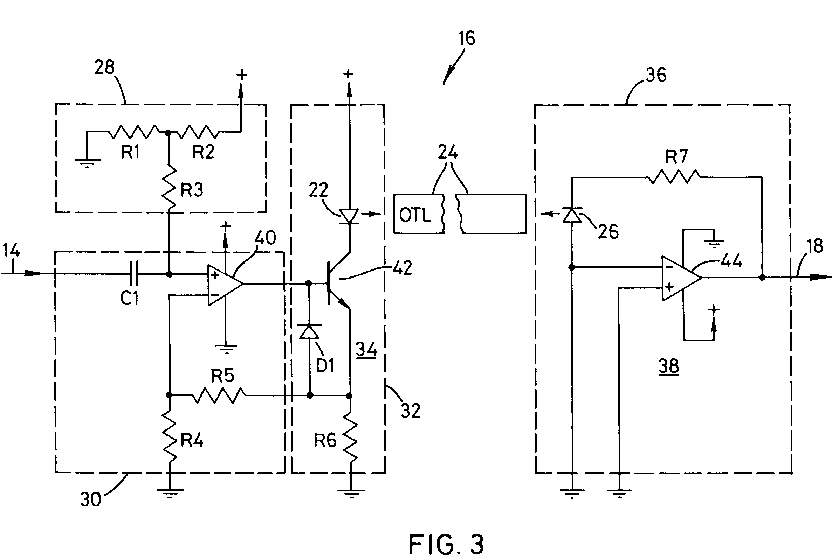

Turning to Fig. 3, which shows an electrical schematic for carrier-less light transmission system 16, DATUM SET CKT 28 comprises a voltage divider including resistors R1 and R2, which provides at its junction with resistor R3 a voltage which is a predetermined voltage, suitable for datum frequency light generation. This voltage level is applied through R3 to the positive input of amplifier 40.

Input audio signals on line 14 are coupled through capacitor C1 also to the positive input of amplifier 40. The circuitry feeding such input of amplifier 40 can thus be termed a composite signal generator, since, in the presence of audio input signals, the voltage level from resistor R3 is added to the audio signals.

Drive signal generator 30 further includes resistor R4, coupling the negative input of amplifier 40 to ground and feedback resistor R5, which renders amplifier 40 as an operational amplifier. The feedback loop is further inclusive of circuit elements of TX stage 32, as noted below.

In its operational amplifier configuration, amplifier 40 functions particularly as a precision current source, providing output drive signals to TX stage 32 which are currents having amplitudes proportional to the instantaneous amplitude of signals on line 14.

TX stage 32 includes transistor 42, the collector of which is connected to the cathode of transmitting element 22, the emitter of which is connected to ground through resistor R6 and the base of which in connected to the output of amplifier 40 Diode D1 is connected in parallel with the base-emitter junction of transistor 42 and serves to preclude signals input to the transistor from being at negative voltages with respect to ground. The emitter of transistor 42 is further connected to feedback resistor R5 and accordingly, the feedback loop is inclusive of the base-emitter junction of transistor 42.

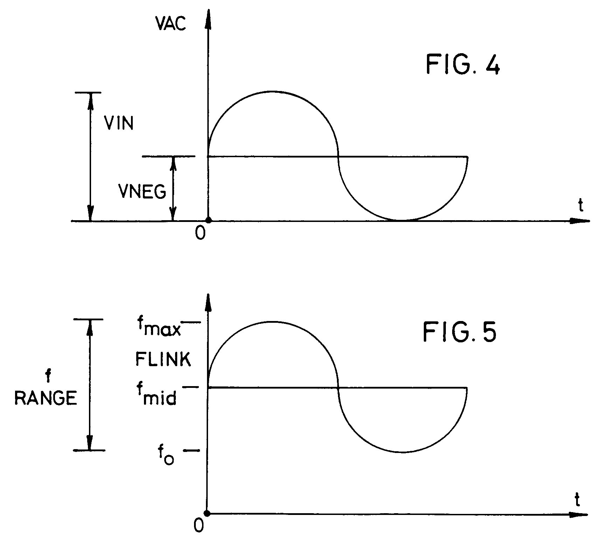

Referring to Fig. 4, which is a voltage (VAC) versus time (t) plot, a composite signal for input to amplifier 40 is seen to include a sinusoidal voltage signal, i.e., the audio input signal, all extent (VIN) of which is positive. Based on the voltage level provided by DATUM SET CKT, the audio input signal is caused to ride on a direct current voltage level (VNEG) which is equal (or greater than) the maximum level of the negative half cycle of the audio signal. The Fig. 4 waveform is likewise precisely indicative of the output current of amplifier 40.

Transmitting element 22 is selected to provide light output which varies in frequency with the level of current flowing therethrough. Fig. 5, which is a plot of link light frequency (FLINK) versus time (t), thus depicts the frequency output by the transmitting element corresponding with the described current excitation thereof.

In Fig. 5, f₀ is the light frequency output when there is no audio input signal on line 14, i.e., the datum level light frequency. Accordingly, all light frequencies output by transmitting element 22 in the presence of audio signal input will exceed the datum level light frequency. Frequency f_{mid} corresponds with the zero-crossovers of the audio signal and frequency fₘₐₓ corresponds with the positive maximum peak of the audio signal.

RX stage 36 includes, in addition to electrooptical transducer 26, amplifier 44, rendered in operational amplifier configuration by resistor R7 and transducer 26. Amplifier 44 is reverse-connected at its inputs from amplifier 40, i.e., its positive input is grounded and its negative input is connected to receive output current of transducer 26. The characteristics of transducer 26 correspond precisely with those of transmitting element 22, namely, it has the same light-to-current characteristic as the current-to-light characteristic of element 22 and is oppositely poled. Operation of RX stage 36 is thus the converse of drive signal generator 30, and the input audio signal on line 14 is replicated as the output audio signal on line 18.

In practical implementation of the invention in connecting an automobile radio to remote power amplifiers driving stereo system speakers, element 22 and transducer 26 may be constituted by RED visible light emitting diodes op5614. With the audio input range extending from twenty hertz to forty-five kilohertz, element 22 places a range of light frequencies of from a datum level of 650nm to a maximum of 660nm on the optical fiber link, which may be of fifteen meters in length. Harmonic distortion induced by EMI/RFI is found to be less than four-tenths of one percent.

Various changes in structure to the described system and practices for effecting carrier-less signal transmission may evidently be introduced without departing from the invention. By way of example, the voltage divider for setting the datum light frequency may have either of its resistors R1 and R2 in variable resistor form to accommodate on-site adjustment thereof. The precision current source for driving the light-transmission element may of course be rendored by other circuitry, as may the TX and RX stages. The light-transmitting element and electrooptic transducer may evidently be constituted by other than LEDs. Accordingly, it is to be understood that the particularly disclosed and depicted embodiment and method is intended in an illustrative and not in a limiting sense. The true spirit and scope of the invention are set forth in the following claims and the preceding statements of invention.

## Claims

1. In a method for transmission of alternating-current electrical input signals from a point of origin thereof to a location remote from said point of origin, the steps of:
a) selecting for transmission from said point of origin to said remote location an electrooptic transmitting element, and optical transmission link and an electrooptic transducer;
b) proestablishing a datum excitation level of said electrooptic transmitting element to cause said electrooptic transmitting element to apply a datum frequency light signal to said optical transmission link in the absence of said input signals, and
c) generating drive signals for said electrooptic transmitting element having characteristics corresponding with said input signals and applying said drive signals to said electrooptic transmitting element to cause the electrooptic transmitting element to apply to said optical transmission link light signals having frequencies exceeding said datum frequency light signal.

2. The invention claimed in Claim 1, wherein said step a) is practised in part by selecting said electrooptic transmitting element to provide diverse light frequency output correspondingly with levels of said drive signals.

3. The invention claimed in Claim 2 wherein said step a) is practised in further part by selecting said electrooptic transducer to provide diverse output voltage levels correspondingly with light frequencies of light output from said optical transmission link.

4. In a system for transmission of alternating-current electrical input signals from a point of origin thereof to a location remote from said point of origin:
a) an electrooptic transmitting element, an optical transmission link and an electrooptic transducer;
b) means for establishing a datum excitation level of said electrooptic transmitting element to cause said electrooptic transmitting element to apply a datum frequency light signal to said optical transmission link in the absence of said input signals; and
c) drive signal generating means for providing drive signals for said electrooptic transmitting element, said drive signals having characteristics corresponding with said input signals and driving said electrooptic transmitting element to cause said electrooptic transmitting element to apply to said optical transmission link light signals having frequencies exceeding said datum frequency light signal.

5. The invention claimed in Claim 4, wherein said electrooptic transmitting element provides diverse light frequency output correspondingly with levels of said drive signals.

6. The invention claimed in Claim 5 wherein said electrooptic transducer provides diverse output voltage levels correspondingly with light frequencies of light output from said optical transmission link.

7. The invention claimed in Claim 4 wherein said optical transmission link is constituted by at least one optical fiber.

8. The invention claimed in any one of Claims 5 to 7 wherein said electrooptic transmitting element comprises a light-emitting element.

9. The invention claimed in Claim 4 wherein said drive signal generating means provides said drive signal by generating direct currents proportional in amplitude to voltage levels of said composite signal.

10. The invention claimed in Claim 9 wherein said driving means includes a semiconductive member connected in series-circuit with said light-emitting element, said drive signal being applied to said semiconductive member.

11. The invention claimed in Claim 10 wherein said semiconductive member is a transistor, said light-emitting element is connected in series with a collector of said transistor and said drive signal is applied to a base of said transistor.
